# EUROPÄISCHE PATENTSCHRIFT

(11) **EP 2 414 698 B1**
(45) Veröffentlichungstag und Bekanntmachung des Hinweises auf die Patenterteilung: **27.11.2013**
(21) Anmeldenummer: 10711040.5
(22) Anmeldetag: 17.03.2010
(51) Int. Cl.: F16D 65/18, F16H 25/22, F16D 121/02, F16D 121/24, F16D 123/00, F16D 125/40, F16D 125/52

(54) **ELEKTROMECHANISCHE FAHRZEUGBREMSE**
ELECTROMECHANICAL VEHICLE BRAKE
FREIN ÉLECTROMÉCANIQUE POUR VÉHICULE

(30) Priorität: 02.04.2009 DE 102009015514; 02.05.2009 DE 102009019793
(43) Veröffentlichungstag der Anmeldung: 08.02.2012
(73) Patentinhaber: Continental Teves AG & Co. oHG, 60488 Frankfurt (DE)
(72) Erfinder: WINKLER, Thomas, 55131 Mainz (DE)
(86) Internationale Anmeldenummer: PCT/EP2010/053434
(87) Internationale Veröffentlichungsnummer: WO 2010/112338

(56) Entgegenhaltungen:
- DE-A1-102007 046 180
- US-A- 1 905 039

## Beschreibung

Die vorliegende Erfindung betrifft eine elektromechanische, insbesondere eine kombinierte, Fahrzeugbremse die eine hydraulisch betätigbare Betriebsbremse und eine elektromechanisch betätigbare Feststellbremsvorrichtung aufweist, wobei in einem Bremsgehäuse ein hydraulischer Betriebsdruckraum von einem Bremskolben begrenzt ist, der zur Durchführung von Betriebsbremsungen mit hydraulischem Druckmittel beaufschlagbar ist, so dass der Bremskolben zur Erzielung einer Bremswirkung entlang einer Kolbenlängsachse betätigbar ist, und wobei die Feststellbremsvorrichtung auf den Bremskolben mittels eines Getriebes wirkt, indem das Getriebe die Rotationsbewegung eines elektromechanischen Aktuators in eine Translationsbewegung umsetzt und eine Betätigung des Bremskolbens zur Durchführung von Feststellbremsvorgängen bewirkt und in der betätigten Stellung hält, wobei das Getriebe eine Gewindespindel und eine Gewindemutter aufweist, die über mehrere Wälzkörper miteinander in Kontakt stehen, wobei ein Federelement vorgesehen ist, das bei einem lastfreien Betätigen des Getriebes ein Rutschen der Wälzkörper ermöglicht und bei einem Betätigen des Getriebes unter Last ein Abrollen der Wälzkörper bewirkt.

Eine hydraulische Fahrzeugbremse mit elektrisch betätigbarer Feststellbremsvorrichtung ist beispielsweise aus der DE 101 50 803 B4 bekannt. Bei der vorbekannten Fahrzeugbremse ist ein Getriebe vorgesehen, das nach dem Wirkprinzip einer Gewindemutter-Spindel-Anordnung die Drehbewegung des Elektromotors in eine Längsbewegung des Bremskolbens zur Erzielung einer Feststellkraft umsetzt. Gemäß einem Ausführungsbeispiel ist diese Getriebeeinheit als sogenannte "Spindel-/Kugelumlaufbüchsenanordnung" ausgebildet, die auch Kugelgewindetrieb oder Kugelumlaufspindel genannt wird. Diese Kugelgewindetriebe weisen eine Gewindespindel und eine Gewindemutter auf, die über mehrere Wälzkörper miteinander in Kontakt stehen.

Aus dem deutschen Gebrauchsmuster DE 76 40 810 U ist eine Schraubenmutter mit Wälzkörperanordnung ohne eine sogenannte Kugelrückführung bekannt. Die Wälzkörper sind dabei begrenzt beweglich zwischen zwei fest mit der Gewindemutter verbundenen Anschlägen verbunden. Nachteilig bei dieser Anordnung ist, dass die Anschläge als Bolzen durch eine Bohrung von außen in die Gewindemutter eingeschoben werden. Da man bei der Bohrung von außen in die Gewindemutter exakt den Gewindegang der Gewindemutter treffen muss, ist die Herstellung schwierig.

Dokument DE 10 2007 046 180 A1 offenbart eine elektromechanische Fahrzeugbremse gemäß dem Oberbegriff des Anspruchs 1.

Es gibt weiterhin rein elektromechanisch betätigbare Bremsen (EMB), die für Brake-By-Wire Bremsanlagen vorgesehen sind, und einen grundsätzlich gleich aufgebauten Kugelgewindetrieb erfordern.

Es ist eine Aufgabe der vorliegenden Erfindung, die Herstellung von einem Kugelgewindetrieb zu vereinfachen, der gleichermaßen für den Einsatz bei kombinierten Bremsen wie auch für den Einsatz bei rein elektromechanisch betätigbaren Bremsen geeignet ist.

Diese Aufgabe wird durch die Merkmale des Patentanspruchs 1 gelöst. Dabei ist vorgesehen, dass das Federelement zwischen den Wälzkörpern und einer in der Gewindemutter ausgebildeten, taschenförmigen Vertiefung angeordnet ist, die einen Anschlag für das Federelement bildet. Der Anschlag für das Federelement wird also ohne zusätzliches Bauteil in die Gewindemutter integriert, indem eine taschenförmige Vertiefung in die Gewindemutter eingebracht wird, in der sich das Federelement abstützt.

Weitere vorteilhafte Merkmale sind den Unteransprüchen entnehmbar.

Bei einer besonders vorteilhaften Weiterbildung des Erfindungsgegenstandes setzt sich die taschenförmige Vertiefung ausgehend vom Gewindegang der Gewindemutter tangential fort und weist eine senkrechte Anschlagfläche für das Federelement auf, an der sich das Federelement abstützt.

Eine weitere vorteilhafte Weiterbildung der Erfindung sieht ein zweites Federelement vor, das am anderen Ende der Wälzkörper zwischen den Wälzkörpern und einer weiteren in der Gewindemutter ausgebildeten, taschenförmigen Vertiefung angeordnet ist, die einen Anschlag für das zweite Federelement bildet. Auch der zweite Anschlag für das Federelement wird also ohne zusätzliches Bauteil in die Gewindemutter integriert, indem eine taschenförmige Vertiefung in die Gewindemutter eingebracht wird, in der sich das Federelement abstützt. Diese taschenförmige Vertiefung ist als tangential zum Gewindegang der Gewindemutter angeordnete Ausnehmung mit einer senkrechten Anschlagfläche für das Federelement ausgebildet.

Im Herstellungsprozess der Gewindemutter ist vorgesehen, dass die taschenförmigen Vertiefungen in einem Schlagverfahren oder in einem Fräsverfahren in die Gewindemutter eingebracht werden.

Die Erfindung wird nachfolgend anhand eines Ausführungsbeispiels im Zusammenhang mit der beiliegenden Zeichnung näher erläutert. In der Zeichnung zeigen:
- Fig. 1: eine Schnittdarstellung einer Fahrzeugbremse mit hydraulisch betätigbarer Betriebsbremse und elektromechanisch betätigbarer Feststellbremse;
- Fig. 2a bis c: verschiedene Darstellungen der erfindungsgemäßen Gewindemutter und
- Fig. 3: eine dreidimensionale Darstellung der erfindungsgemäßen Gewindemutter.

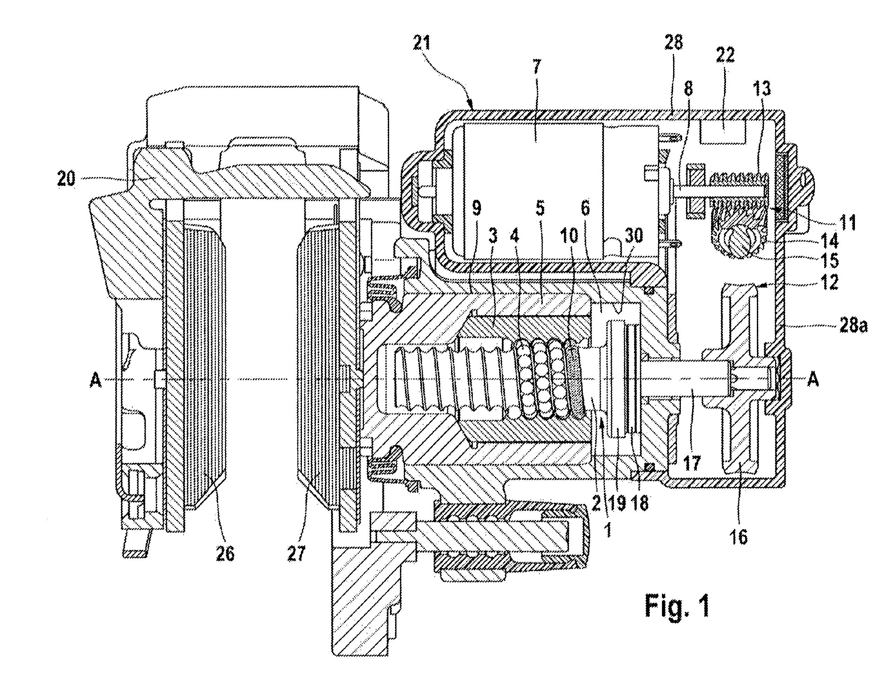

Die in Fig. 1 dargestellte hydraulische Fahrzeugbremse weist einerseits eine hydraulisch betätigbare Betriebsbremse und andererseits eine elektromechanisch betätigbare Feststellbremse auf. Die Fahrzeugbremse ist im gezeigten Beispiel als Schwimmsattel-Scheibenbremse ausgeführt, deren durch eine hydraulische Betätigung hervorgerufene Funktion dem auf diesem Gebiet tätigen Fachmann wohlbekannt ist und deswegen nicht näher erläutert zu werden braucht. Der Betätigung der Feststellbremse dient ein elektromechanischer Aktuator 7 bzw. Elektromotor 7, der zusammen mit einem zweistufigen Getriebe, der erforderlichen Sensorik sowie einer elektronischen Steuereinheit 22 in einem Antriebsmodul 21 integriert ist. Die oben erwähnte Fahrzeugbremse weist weiterhin ein Bremsgehäuse bzw. einen Bremssattel 20 auf, welcher den äußeren Rand einer nicht dargestellten Bremsscheibe und zwei auf beiden Seiten der Bremsscheibe angeordnete Bremsbeläge 26, 27 umgreift. Das Bremsgehäuse 20 bildet auf seiner Innenseite einen Bremszylinder 9, der einen Bremskolben 5 axial verschiebbar aufnimmt. In den zwischen Bremszylinder 9 und Bremskolben 5 gebildeten Betriebsdruckraum 6 kann zur Durchführung von Betriebsbremsungen Bremsflüssigkeit zugeführt werden, so dass sich ein Bremsdruck aufbaut, der den Bremskolben 5 axial entlang einer Kolbenlängsachse A zur Bremsscheibe hin verschiebt. Dadurch wird der dem Bremskolben 5 zugewandte Bremsbelag 27 gegen die Bremsscheibe gedrückt, wobei als Reaktion das Bremsgehäuse 20 sich in der entgegen gesetzten Richtung verschiebt und dadurch auch den anderen Bremsbelag 26 gegen die Bremsscheibe drückt.

Wie bereits erwähnt wurde, ist eine Feststellbremsvorrichtung zur Durchführung von Feststellbremsvorgängen elektromechanisch betätigbar und wirkt ebenfalls auf den Bremskolben 5. Dazu ist ein Getriebe 1 vorgesehen, das die Rotationsbewegung des elektromechanischen Aktuators 7 bzw. Elektromotors 7 in eine Translationsbewegung umsetzt und eine Betätigung des Bremskolbens 5 entlang der Achse A bewirkt. Das Getriebe 1 wird im Wesentlichen durch eine Gewindespindel 2 und eine Gewindemutter 3 gebildet, die über Wälzkörper 4 miteinander in Verbindung stehen. Die Wälzkörper 4 sind als Kugeln ausgebildet. Ein mit der Gewindespindel 2 verbundener Schaft 17 ragt an der der Bremsscheibe abgewandten Seite aus dem Bremsgehäuse 20 heraus und wird unter Zwischenschaltung eines zweistufigen Untersetzungsgetriebes von dem vorhin erwähnten elektromechanischen Aktuator 7 angetrieben. Dabei sind Mittel zum Abdichten des Betriebsdruckraums 6 in der Bohrung des Bremsgehäuses 20, durch die der Schaft 17 ragt, vorgesehen. Die auf die Gewindespindel 2 übertragene Rotationsbewegung wird über die Kugeln 4, die sich im Gewindegang zwischen Gewindespindel 2 und Gewindemutter 3 befinden, auf die Gewindemutter 3 übertragen, die eine Translationsbewegung in Richtung der Achse A vollzieht. Dadurch wird auch der Bremskolben 5 betätigt, an dem sich die Gewindemutter 3 abstützt. Gleichzeitig wird die Gewindespindel 2 von einer Stufenbohrung 30 im Bremsgehäuse 20 aufgenommen und stützt sich über einen mit der Spindel 2 verbundenen Kragen 19 und ein Axiallager 18 am Bremsgehäuse 20 ab. Das Getriebe 1 setzt also die Drehbewegung des elektromechanischen Aktuators 7 in eine Linearbewegung um und ist für die Generierung der Zuspannkraft zur Durchführung eines Feststellbremsvorganges verantwortlich.

Beim Lösen der Feststellbremsvorrichtung wird der Elektromotor 7 entsprechend in der Gegenrichtung betrieben und die Gewindemutter 3 und damit auch der Bremskolben 5 vollziehen eine Bewegung in der Zeichnung nach rechts. Die Bremsbeläge 26, 27 sind nicht mehr mit der Bremsscheibe in Kontakt und der Feststellbremsvorgang ist beendet.

Der vorhin erwähnte Elektromotor 7 und das zweistufige Getriebe werden von einem zum Antriebsmodul 21 gehörenden Gehäuse 28 aufgenommen, das mit einem Gehäusedeckel 28a verschließbar ist. In der in Fig. 1 dargestellten Ausführungsform ist das zweistufige Getriebe als Schneckengetriebe 11, 12 ausgebildet. Schneckengetriebe sind eine Kategorie der Schraubwälzgetriebe, bei denen im Gegensatz zu den Wälzgetrieben auch ein Gleitanteil in der Bewegung vorhanden ist. Aufgebaut ist ein solches Schneckengetriebe aus einem schraubenförmig verzahnten Rad, einer Schnecke, und einem darin kämmenden schrägverzahnten Rad, dem Schneckenrad.

Die erste Getriebestufe, das heißt das erste Schneckengetriebe 11, ist eingangsseitig mit der Ausgangswelle 8 des Elektromotors 7 verbunden, während die zweite Getriebestufe, das heißt das zweite Schneckengetriebe 12, ausgangsseitig mit dem Schaft 17 bzw. mit dem Getriebe 1 bzw. 2, 3 verbunden ist. Wie es dargestellt ist, ist eine erste Schnecke 13 auf die Ausgangswelle 8 des Elektromotors 7 aufgesteckt und kämmt ein erstes Schneckenrad 14. Auf das Drehzentrum des ersten Schneckenrads 14 ist eine zweite Schnecke 15 aufgesteckt und wird von diesem in Rotation versetzt. Die zweite Schnecke 15 wiederum kämmt ein zweites Schneckenrad 16, das drehfest mit dem Schaft 17 verbunden ist und den Schaft 17 gemeinsam mit dem Getriebe 1 in Rotation versetzt und dabei eine translatorische Bewegung des Bremskolbens 5 erzeugt. Damit die auf diese Weise eingestellte Zuspannkraft während eines Feststellbremsvorganges erhalten bleibt, ist das zweite Schneckengetriebe 12 selbsthemmend ausgeführt.

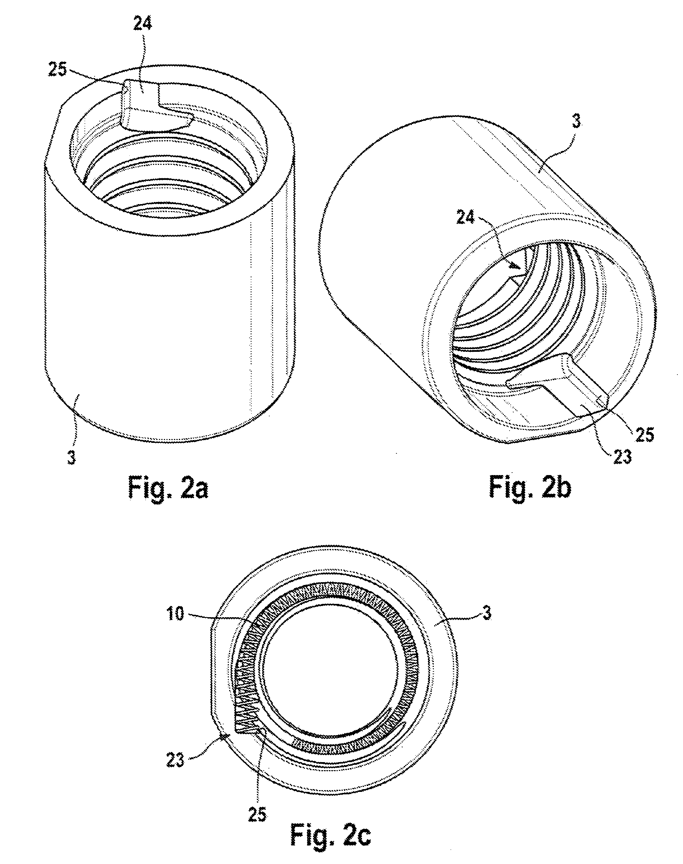

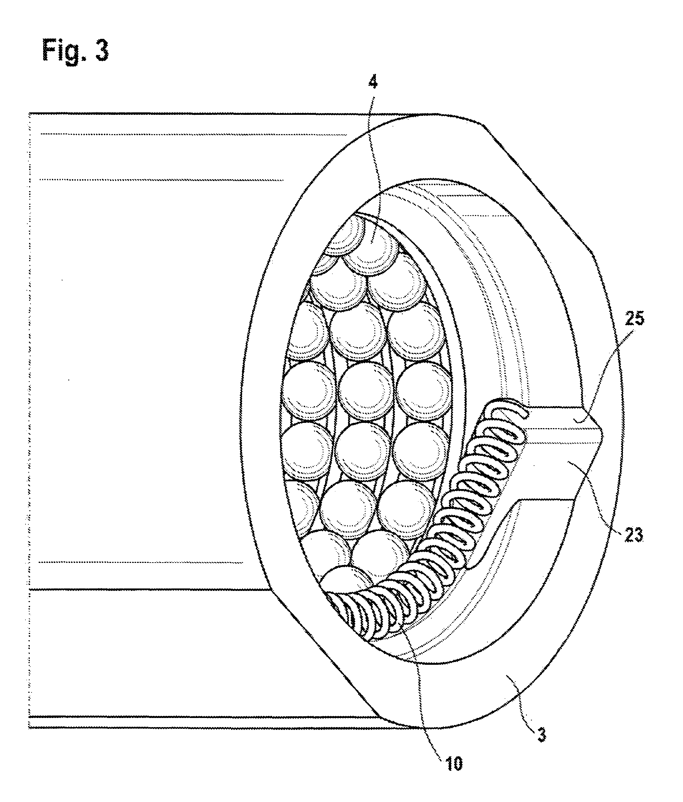

Bei einer Betätigung des Getriebes 1 unter Last rollen die Wälzkörper 4 im Gewindegang ab. Dadurch wird ein verhältnismäßig hoher Wirkungsgrad von 85% bis 95% erreicht, bzw. bei Berücksichtigung der Reibungsverluste am Axiallager 18 75% bis 85%. Bei einem lastfreien Betätigen des Getriebes 1 rutschen die Wälzkörper 4 dagegen, d.h. bis der dem Bremskolben 5 zugeordnete Bremsbelag 27 an der nicht dargestellten Bremsscheibe anliegt, rutschen die Kugeln 4, weil es sich hierbei um eine nahezu lastfreie Betätigung handelt. Erst unter Last beginnen die Kugeln 4 zu wälzen bzw. abzurollen. Das Getriebe 1 wirkt also gleichzeitig als Nachstellung falls die Bremsbeläge 26, 27 verschlissen sind. Der Verzicht auf eine separate Nachstelleinrichtung bzw. die Integration von Nachstelleinrichtung und Betätigungseinrichtung in ein einziges Bauteil ist besonders kostengünstig und gleichzeitig robust. Damit das Abrollen der Wälzkörper 4 unter Last und das Rutschen bei lastfreier Betätigung des Getriebes 1 stets möglich ist, ist ein Federelement 10 vorgesehen, das einen Wälzweg zum Abrollen der Wälzkörper 4 vorhält. Die Wälzkörper 4 sind zwischen zwei Anschlägen im Gewindegang begrenzt beweglich angeordnet, wobei das Federelement 10 zum Vorhalten einer Wälzweges für die Wälzkörper 4 zwischen den Wälzkörpern 4 und einem ersten Anschlag angeordnet ist. Der erste Anschlag ist als taschenförmige Vertiefungen 23 ausgebildet und setzt sich ausgehend vom Gewindegang der Gewindemutter 3 tangential fort. Die taschenförmige Vertiefung 23 endet in einer senkrechten Anschlagfläche 25, an der sich das Federelement 10 abstützt, wie insbesondere die Fig. 2 und 3 illustrieren. Ein zweites Federelement ist zwischen den Wälzkörpern 4 und dem anderen Anschlag, also der anderen taschenförmigen Vertiefung 24 angeordnet und dient als sogenannte Vordruckfeder. Diese Vordruckfeder stützt sich in der zweiten taschenförmigen Vertiefung 24 ab.

Wie Fig. 2a bis c entnehmbar ist, sind beide Anschläge als taschenförmige Vertiefungen 23, 24 in der Gewindemutter 3 ausgebildet und werden also ohne zusätzliches Bauteil in die Gewindemutter 3 integriert. Die taschenförmigen Vertiefungen 23, 24 werden während des Herstellungsprozesses der Gewindemutter 3 in einem Schlagverfahren oder in einem Fräsverfahren in die Gewindemutter 3 eingebracht.

Fig. 3 verdeutlicht dabei, dass sich die taschenförmige Vertiefung 23 - und in gleicher Weise auch die taschenförmige Vertiefung 24 an dem anderen Ende der Gewindemutter 3 - als tangential zum Gewindegang der Gewindemutter 3 angeordnete Ausnehmung mit einer senkrechten Anschlagfläche 25 für das Federelement 10 ausgebildet ist.

Vorteilhaft ist bei der beschriebenen Ausführung, dass für die Anschläge keine separaten Bauteile notwendig sind, sondern die Anschläge kostengünstig in die Gewindemutter 3 integriert werden.

Obwohl die Erfindung, insbesondere anhand der Zeichnung, primär am Beispiel einer kombinierten Bremse erläutert worden ist, sind prinzipiell Anwendungen bei rein elektromechanisch betätigbaren brake-by-wire-Bremsvorrichtungen (EMB) denkbar, welche keinerlei hydraulische Betätigungsvorrichtung aufweisen.

### Bezugszeichenliste

- 1: Getriebe
- 2: Spindel bzw. Gewindespindel
- 3: Gewindemutter
- 4: Wälzkörper bzw. Kugeln
- 5: Bremskolben
- 6: hydraulischer Betriebsdruckraum
- 7: elektromechanischer Aktuator
- 8: Ausgangswelle
- 9: Bremszylinder
- 10: erstes Federelement
- 11: erstes Schneckengetriebe
- 12: zweites Schneckengetriebe
- 13: erste Schnecke
- 14: erstes Schneckenrad
- 15: zweite Schnecke
- 16: zweites Schneckenrad
- 17: Schaft
- 18: Axiallager
- 19: Kragen
- 20: Bremssattel
- 21: Antriebsmodul
- 22: Steuereinheit
- 23: Vertiefung
- 24: Vertiefung
- 25: Anschlagfläche
- 26: Bremsbelag
- 27: Bremsbelag
- 28: Gehäuse
- 28a: Gehäusedeckel
- 29:
- 30: Stufenbohrung

## Patentansprüche

1. Elektromechanische Fahrzeugbremse, vorzugsweise kombinierte Bremse, umfassend eine hydraulisch betätigbare Betriebsbremse und eine elektromechanisch betätigbare Feststellbremsvorrichtung, wobei in einem Bremsgehäuse (20) ein hydraulischer Betriebsdruckraum (6) von einem Bremskolben (5) begrenzt ist, der zur Durchführung von Betriebsbremsungen mit hydraulischem Druckmittel beaufschlagbar ist, so dass der Bremskolben (5) hydraulisch zur Erzielung einer Bremswirkung entlang einer Kolbenlängsachse (A) betätigbar ist, aufweisend eine insbesondere als Feststellbremsvorrichtung gestaltete elektromechanische Betätigung, die auf den Bremskolben (5) mittels eines Getriebes (1) wirkt, indem das Getriebe (1) die Rotationsbewegung eines elektromechanischen Aktuators (7) in eine Translationsbewegung umsetzt und eine Betätigung des Bremskolbens (5) zur Durchführung von Feststellbremsvorgängen bewirkt und in der betätigten Stellung hält, wobei das Getriebe (1) eine Gewindespindel (2) und eine Gewindemutter (3) aufweist, die über mehrere Wälzkörper (4) miteinander in Kontakt stehen, wobei ein Federelement (10) vorgesehen ist, das bei einem lastfreien Betätigen des Getriebes (1) ein Rutschen der Wälzkörper (4) ermöglicht und bei einem Betätigen des Getriebes (1) unter Last ein Abrollen der Wälzkörper (4) bewirkt, **dadurch gekennzeichnet, dass** das Federelement (10) zwischen den Wälzkörpern (4) und einer in der Gewindemutter (3) ausgebildeten, taschenförmigen Vertiefung (23) angeordnet ist, die einen Anschlag für das Federelement (10) bildet.

2. Elektromechanische Fahrzeugbremse nach Anspruch 1, **dadurch gekennzeichnet, dass** sich die taschenförmige Vertiefung (23) ausgehend vom Gewindegang der Gewindemutter (3) tangential fortsetzt und eine senkrechte Anschlagfläche (25) für das Federelement (10) aufweist, an der sich das Federelement (10) abstützt.

3. Elektromechanische Fahrzeugbremse nach Anspruch 1 oder 2, **dadurch gekennzeichnet, dass** ein zweites Federelement (29) vorgesehen ist, das zwischen den Wälzkörpern (4) und einer weiteren in der Gewindemutter (3) ausgebildeten, taschenförmigen Vertiefung (24) angeordnet ist, die einen Anschlag für das zweite Federelement (29) bildet.

4. Elektromechanische Fahrzeugbremse nach Anspruch 3, **dadurch gekennzeichnet, dass** die weitere taschenförmige Vertiefung (24) als tangential zum Gewindegang der Gewindemutter (3) angeordnete Ausnehmung mit einer senkrechten Anschlagfläche für das zweite Federelement (29) ausgebildet ist.

5. Elektromechanische Fahrzeugbremse nach einem der vorhergehenden Ansprüche, **dadurch gekennzeichnet, dass** die taschenförmigen Vertiefungen in einem Schlagverfahren oder in einem Fräsverfahren in die Gewindemutter (3) eingebracht werden.

## Claims

1. Electromechanical vehicle brake, preferably a combined brake comprising a hydraulically actuatable service brake and an electromechanically actuatable parking brake device, wherein a hydraulic operating pressure chamber (6) is delimited in a brake housing (20) by a brake piston (5) which can be loaded by hydraulic pressure medium in order to perform service braking operations, such that the brake piston (5) can be actuated hydraulically along a longitudinal piston axis (A) in order to produce a braking effect, and having an electromechanical actuation, in particular in the form of a parking brake device, which acts on the brake piston (5) by means of a gear unit (1) in that the gear unit (1) converts the rotary motion of an electromechanical actuator (7) into a translational motion, causing the brake piston (5) to be actuated to perform parking brake processes and to remain in the actuated position, wherein the gear unit (1) comprises a threaded spindle (2) and a threaded nut (3) which contact one another via a plurality of rolling elements (4), wherein there is provided a spring element (10) which allows the rolling elements (4) to slip when the gear unit (1) is actuated in an unloaded state while causing the rolling elements (4) to roll when the gear unit (1) is actuated under load, **characterized in that** the spring element (10) is arranged between the rolling elements (4) and a pocket-shaped recess (23) which is formed in the threaded nut (3) and forms a stop for the spring element (10).

2. Electromechanical vehicle brake according to Claim 1, **characterized in that** the pocket-shaped recess (23), starting from the thread convolution of the threaded nut (3), is continued tangentially and has a perpendicular stop face (25) for the spring element (10), against which the spring element (10) bears.

3. Electromechanical vehicle brake according to Claim 1 or 2, **characterized in that** there is provided a second spring element (29) which is arranged between the rolling elements (4) and a further pocket-shaped recess (24) which is formed in the threaded nut (3) and forms a stop for the second spring element (29).

4. Electromechanical vehicle brake according to Claim 3, **characterized in that** the further pocket-shaped recess (24) is configured as a recess arranged tangentially to the thread convolution of the threaded nut (3), with a perpendicular stop face for the second spring element (29).

5. Electromechanical vehicle brake according to any one of the preceding claims, **characterized in that** the pocket-shaped recesses are worked into the threaded nut (3) using an impact process or a milling process.

## Revendications

1. Frein électromécanique pour véhicule, de préférence frein combiné, comprenant un frein de service pouvant être actionné par voie hydraulique et un dispositif de frein de stationnement pouvant être actionné par voie électromécanique, un espace de pression de service hydraulique (6) étant limité dans un boîtier de frein (20) par un piston de frein (5) qui peut être sollicité avec du fluide hydraulique sous pression pour effectuer des freinages de service, de telle sorte que le piston de frein (5) puisse être actionné hydrauliquement pour produire un effet de freinage le long d'un axe longitudinal du piston (A), présentant une commande électromécanique configurée notamment sous forme de dispositif de frein de stationnement, laquelle agit sur le piston de frein (5) au moyen d'un engrenage (1), l'engrenage (1) convertissant le mouvement de rotation d'un actionneur électromécanique (7) en un mouvement de translation et provoquant un actionnement du piston de frein (5) pour effectuer des opérations de freinage de stationnement et le maintenant dans la position actionnée, l'engrenage (1) présentant une broche filetée (2) et un écrou fileté (3) qui sont en contact l'un avec l'autre par le biais de plusieurs corps de roulement (4), un élément de ressort (10) étant prévu, lequel, dans le cas d'un actionnement sans charge de l'engrenage (1), permet un glissement des corps de roulement (4) et dans le cas d'un actionnement de l'engrenage (1) sous charge, provoque un roulement des corps de roulement (4), **caractérisé en ce que** l'élément de ressort (10) est disposé entre les corps de roulement (4) et un renfoncement (23) en forme de cavité réalisé dans l'écrou fileté (3), lequel renfoncement forme une butée pour l'élément de ressort (10).

2. Frein électromécanique pour véhicule selon la revendication 1, **caractérisé en ce que** le renfoncement (23) en forme de cavité se prolonge tangentiellement à partir du filet de l'écrou fileté (3) et présente une surface de butée perpendiculaire (25) pour l'élément de ressort (10), contre laquelle s'appuie l'élément de ressort (10).

3. Frein électromécanique pour véhicule selon la revendication 1 ou 2, **caractérisé en ce qu**'il est prévu un deuxième élément de ressort (29) qui est disposé entre les corps de roulement (4) et un autre renfoncement (24) en forme de cavité réalisé dans l'écrou fileté (3), lequel renfoncement forme une butée pour le deuxième élément de ressort (29).

4. Frein électromécanique pour véhicule selon la revendication 3, **caractérisé en ce que** l'autre renfoncement (24) en forme de cavité est réalisé sous forme d'évidement disposé tangentiellement par rapport au filet de l'écrou fileté (3) avec une surface de butée perpendiculaire pour le deuxième élément de ressort (29).

5. Frein électromécanique pour véhicule selon l'une quelconque des revendications précédentes, **caractérisé en ce que** les renfoncements en forme de cavité sont réalisés par un procédé de percussion ou par un procédé de fraisage dans l'écrou fileté (3).
